**Europäisches Patentamt**

**European Patent Office**

**Office européen des brevets**

(19)

(11) **EP 1 227 178 A2**

(12) **EUROPÄISCHE PATENTANMELDUNG**

(43) Veröffentlichungstag:
**31.07.2002 Patentblatt 2002/31**

(51) Int Cl.⁷: **D01F 13/04**, B29B 17/02,
B01F 7/16

(21) Anmeldenummer: **02000232.5**

(22) Anmeldetag: **14.01.2002**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **24.01.2001 DE 10103029**

(71) Anmelder: **Bayer Faser GmbH
41538 Dormagen (DE)**

(72) Erfinder:
• **Anderheggen, Wolfgang
41539 Dormagen (DE)**

• **Herbertz, Toni
41540 Dormagen (DE)**
• **Reinehr, Ulrich, Dr.
41539 Dormagen (DE)**
• **Sehm, Tilo
40591 Düsseldorf (DE)**

(74) Vertreter: **Bramer-Weger, Elmar et al
Bayer AG
Konzernbereich RP,
Patente und Lizenzen
51368 Leverkusen (DE)**

(54) **Verfahren und Vorrichtung zur Ölabscheidung aus präparationshaltigen Elastan-Schnittfasern**

(57) Es wird ein Verfahren und eine Vorrichtung zur Abscheidung von mindestens 50 Gew.-% ölartigen Präparationsmitteln aus präparationshaltigen Elastanfasern bezogen auf 100 Gew.-% Ausgangsgehalt an Präparationsmittel in dem Elastanausgangsmaterial, bei dem man eine Mischung von Elastanfasern mit unterschiedlichem Titer als Faserschnitt einsetzt, wobei man von Fasern mit einem Titer von 11 bis 10000 dtex und mehr ausgeht, die Elastan-Schnittfasern in einem Mischbehälter mit Wasser im Flottenverhältnis Wasser/Elastan-Schnittfasern, von mindestens 5/1 vermischt, die Vermischung unter Verwendung von Rührwerkzeugen (3) mit einer Drehzahl von mindestens 1500 1/min vornimmt, die Behandlung bei Raumtemperatur oder erhöhter Temperatur, insbesondere bis 90°C durchführt, eine Behandlungsdauer von 10 bis 60 Minuten einhält und anschließend die Präparationsmittel enthaltende Wasserflotte von dem Fasermaterial abtrennt.

Fig. 1

**Beschreibung**

Die Erfindung betrifft ein Verfahren und eine Vorrichtung zur Ölabscheidung aus präparationshaltigen Elastan-Schnittfasem, die zur Wiederaufarbeitung vorgesehen sind. Aus der Offenlegungsschrift DE 19 907 830 A1 ist ein Verfahren zur Herstellung von Elastanfäden aus Recyclingmaterial nach dem Trockenspinnverfahren oder Nassspinnverfahren bekannt geworden. Hierbei geht man von Elastan-Abfallmaterial aus, welches durch Zerkleinerung der Elastanfäden auf Schnittlängen von mindestens 1 mm erzeugt wird. Aus den zerkleinerten Elastanfäden können mit einem Spinnlösungsmittel unter Zusatz eines sekundären, aliphatischen Amins homogene Elastanspinnlösungen, die gegebenenfalls mit Elastan-Frischlösungen vermischt werden, hergestellt und zu gebrauchstüchtigen Elastanfäden versponnen werden.

Unter Elastanfasem werden Fäden verstanden, die zu mindestens 85 Gew.-% aus segmentierten Polyurethanen oder Polyurethanharnstoffen bestehen. Diese Polyurethanharnstoffe sind so aufgebaut, dass das Makromolekül eine Segmentstruktur aus kristallinen Blöcken (Hartsegmenten) und amorphen Blöcken (Weichsegmenten) besitzt.

Zur besseren Weiterverarbeitung werden Elastanfäden vor dem Aufwickeln auf Spulen mit Schmiermittelgemischen, den sogenannten Präparationsölen, beaufschlagt. Je nach Type und Titer, weisen die Elastanfäden die zur Zerkleinerung in Schnittfasern verwendet werden, unterschiedliche Gehalte an Präparationsölen von ca. 3 bis 15 Gew.-%, bezogen auf Elastanfeststoff, auf. Im Allgemeinen beträgt der Präparationsauftrag bei Elastanfäden die als Weichmacher eine Polyesterkomponente (PES) enthalten 3 bis 7 Gew.-%, während bei Elastanfäden mit einer Polyetherkomponente (PET) als Weichmacher, Präparationsgehalte bis zu 15 Gew.-% üblich sind. Die hohen Präparationsgehalte treten vorzugsweise bei sehr feinen Elastanfäden, mit Titern kleiner als 33 dtex auf.

Diese Präparationsöle bestehen in der Regel aus Mineralölen, Silikonölen und Metallsalzen von Fettsäuren. Eine bevorzugte Präparation für Elastanfäden, die nach dem Trockenspinnverfahren hergestellt worden sind, besteht nach EP 046 073 A2 aus 90 % Polydimethylsiloxan und 10 % Polyamylsiloxan mit 4 bis 10 % eines Metallsalzes einer Fettsäure, bezogen auf das Gesamtgewicht der Präparation. Das Metall der Fettsäure ist Calcium, Lithium, oder Magnesium. Die Fettsäure ist aus der Gruppe von ungesättigten und gesättigten Fettsäuren mit 10-12 Kohlenstoffatomen, ausgewählt.

Ein bevorzugt zur Anwendung kommendes Präparationsgemisch besteht zum Beispiel aus 91 % Polydimethylsiloxan, 5 % Polyamylsiloxan und 4 % Magnesiumstearat.

Für Elastanfäden die nach dem Nassspinnverfahren hergestellt worden sind, kann nach DD 251 587 eine Spinnpräparation bestehend aus einer wässrigen Suspension von Magnesium- und/oder Calciumstearat und eine Emulsion aus Polydimethylsiloxan in einer Konzentration von 1 - 20 g/Liter zugesetzt werden.

Bei der Wiederaufarbeitung von präparationshaltigen Elastan-Schnittfasern der oben genannten Art stellen die hohen Gehalte an Präparationsmittelgemischen ein großes Problem dar. Die Präparationen gelangen über die Spinnlösung in die Spinnschächte beim Trockenspinnen, bzw. über die Fixiervorrichtungen, wie zum Beispiel Kalander oder Heizrollen bei Nassspinnverfahren, wo sie teilweise verdampfen und sich zersetzen. Ferner kondensieren nicht unerhebliche Mengen Präparationsmittel an den kälteren Stellen der Produktionsanlagen, was zu Ablagerungen, abtropfenden Ölen auf die produzierten Elastanfäden und zu Verstopfungen und Störungen im Prozessablauf führen kann.

In der Patentschrift CA 771 086 wird daher vorgeschlagen, vorhandene Präparationen auf den Elastanfäden mit den Lösungsmitteln Aceton oder Isopropylalkohol von den Elastanfäden abzuwaschen. Ein derartiges Verfahren ist sehr aufwendig (es erfordert den Einsatz explosionsgeschützter Apparate) und bedarf einer sorgfältigen Trocknung der Elastanfäden, da bereits geringe Mengen an Restlösungsmitteln die Elastanspinnlösungen verunreinigen, was wiederum zu Spinnstörungen führen kann.

In der Offenlegungsschrift EP 881 324 A2 wird ebenfalls ein Verfahren zur gleichzeitigen Avivage-Entfernung und zum Einfärben von Synthesefasern vorgeschlagen, wobei man mit wässrigen Flotten arbeitet, denen Tenside wie Betaine, Aminoxide und Terpenkohlenwasserstoffe und Farbstoffe im pH-Bereich zwischen 4-7,5 zugesetzt werden. Auch dieses Verfahren ist durch die vielen Behandlungsschritte wie Abkühlen, Ablassen, Spülen und Nachbehandeln sehr kosten- und zeitintensiv und kommt auch durch die vielen Zusatzstoffe aus ökologischen Gründen für eine Präparationsentfernung aus Elastanschnittfasern im technischen Maßstab, nicht infrage.

Weitere Versuche mit Lösungsmitteln wie Toluol, Cyclohexan, 1-Butenol oder 1,1,1-Trichlorethan, die Präparationsöle aus Elastan-Schnittfasern auszuwaschen sind zwar grundsätzlich möglich, doch ihre Umsetzung im technischen Maßstab scheiterte an einem zu hohen Lösungsmittelbedarf hierzu. Die maximale Beladung der erwähnten Lösungsmittel an Präparationsöl lag bei 5 Gew.-%. Ferner ist die Aufarbeitung der Fest/Flüssig-Trennprodukte nur mit aufwendigen Apparaten möglich. So beträgt zum Beispiel der Cyclohexangehalt für Elastan-Schnittfasern nach dem Waschen und einer Filtration noch ca. 110 Gew.-%, nach einem weiteren Schleudervorgang noch ca. 40 - 50 Gew.-% und nach einem zusätzlichen Abpressvorgang noch ca. 35 - 40 Gew.-% an Restlösungsmittel.

Da unter diesen Voraussetzungen selbst nach einer Trocknung der Elastan-Schnittfasern das Einschleppen von Lösungsmitteln in den Spinn- und Destillationsprozess kaum vollständig zu vermeiden ist, kommen die erwähnten Lösungsmittel zum Abwaschen der Elastan-Schnittfasern von Präparationsölen ohne hohen Apparate- und Energieaufwand nicht infrage.

Aufgabe der vorliegenden Erfindung war es, ein Verfahren zur Ölabscheidung aus präparationshaltigen Elastan-Schnittfasern vorzuschlagen, was die erwähnten Nachteile nicht aufweist und sich kostengünstig im technischen Maßstab realisieren lässt.

Es wurde nun überraschenderweise gefunden, dass sich die erwähnten Präparationsöle von Elastan-Recyclingmaterial aus wässrigen Flotten durch Behandlung mit hochtourigen Rührwerkzeugen auf mechanischem Wege sehr gut abtrennen lassen. Je nach Flottenverhältnis Wasser/Elastan-Recyclingmaterial, Behandlungsdauer, Behandlungstemperatur, Titermix und Tourenzahl des Rührwerkzeuges, sowie Scherwerkbesatz des Mischbehälters, lassen sich bis zu ca. 90 Gew.-% der ursprünglich vorhandenen Präparationsöle aus dem Elastan-Recyclingmaterial abscheiden.

Die Bestimmung des Polydimethylsiloxangehaltes im Ausgangsmaterial erfolgt über H-NMR-Analyse. Die Bestimmung des Polydimethylsiloxangehaltes der Elastan-Schnittfasern nach der Behandlung mit wässriger Flotte erfolgt nach einstündiger Trocknung der Schnittfasern im Umlufttrockenschrank bei 100°C nach der gleichen Methode. Die Bestimmung des Polydimethylsiloxangehaltes in der wässrigen Flotte wird folgendermaßen durchgeführt: Die wässrige Flotte wird mit Chloroform ausgeschüttelt und das Silikonöl im Extrakt ebenfalls über H-NMR-Analyse quantitativ bestimmt.

Der Präparationsverlust des Elastan-Recyclingmaterials berechnet sich wie folgt

$$\text{Präparationsverlust (\%)} = 100 - \left( \frac{\text{Ölgehalt Elastan-Schnittfasern nachher (Gew.-\%)}}{\text{Ölgehalt Elastan-Schnittfasern vorher (Gew.-\%)}} \times 100 \right)$$

Gegenstand der Erfindung ist ein Verfahren zur Abscheidung von mindestens 30 Gew.-%, bevorzugt mindestens 50 Gew.-% ölartigen Präparationsmitteln aus präparationshaltigen Elastanfasern, bevorzugt Präparationsmitteln, die Polydialkylsiloxan, besonders bevorzugt Polydimethylsiloxan enthalten, bezogen auf 100 Gew.-% Ausgangsgehalt an Präparationsmittel in dem Elastanausgangsmaterial, das zur Wiederaufarbeitung in Form von Spinnlösungen vorgesehen ist, dadurch gekennzeichnet, dass man

a) eine Mischung von Elastanfasern mit unterschiedlichem Titer als Faserschnitt einsetzt, wobei man von Fasern mit Titern von 11 bis 10000 dtex und mehr ausgeht und insbesondere den Anteil an Feintiterfasern mit nur einem bestimmten Titer kleiner oder gleich 900 dtex unter 80 Gew.-% bezogen auf 100 Gew.-% Ausgangsgewicht an Fasern hält,

b) die Elastan-Schnittfasern in einem Mischbehälter mit Wasser im Flottenverhältnis Wasser/Elastan-Schnittfasern, von mindestens 5/1 vermischt,

c) die Vermischung unter Verwendung von Rührwerkzeugen mit einer Drehzahl von mindestens 1200 l/min vornimmt,

d) die Behandlung bei Raumtemperatur oder erhöhter Temperatur, insbesondere bis 90°C, bevorzugt bis 70°C durchführt,

e) eine Behandlungsdauer von 10 bis 60 Minuten einhält und

f) anschließend die Präparationsmittel enthaltende Wasserflotte von dem Fasermaterial abtrennt.

Im folgenden werden unter dem Begriff Elastan-Recyclingmaterial, Elastan-Schnittfasern der Polyester- und/oder Polyethertype mit Präparationsölgehalten von typischerweise 3 - 15 Gew.-% verstanden.

Präparationsöle im Sinne der Erfindung bestehen typischerweise aus Mineralölen, und/oder Silikonölen ggf. unter Hinzufügung von Metallsalzen von Fettsäuren. Eine Präparation für Elastanfäden besteht beispielsweise aus 90 % Polydimethylsiloxan und 10 % Polyamylsiloxan mit 4 - 10 Gew.-% eines Metallsalzes einer Fettsäure, bezogen auf das Gesamtgewicht der Präparation. Das Metall der Fettsäure ist gewöhnlich Calcium, Lithium, oder Magnesium. Die Fettsäure ist aus der Gruppe von ungesättigten und gesättigten Fettsäuren mit 10-12 Kohlenstoffatomen, ausgewählt. Bevorzugt werden als Elastan-Schnittfasern Elastane auf Basis Polyetherurethanen und/oder Polyesterurethanen, oder Gemischen aus polyether- und polyesterbasierten Elastan-Schnittfasern in beliebigem Mischungsverhältnis, eingesetzt.

Vorteilhaft ist eine Variante des Verfahrens bei der die Rührwerkzeuge aus mindestens 2 Rührerwellen mit mindestens 2 Dissolverscheiben pro Rührer bestehen mit einem Verhältnis des Durchmessers der Dissolverscheiben zum Durchmesser des Kessels von 1 zu 5 bis 3 zu 5.

Die Drehzahl der Rührerwellen beträgt vorzugsweise mindestens 2000 l/min, besonders vorzugsweise mindestens 3000 l/min.

Mit diesen Maßnahmen wird die Effektivität der Ablösung des Präparationsmittels von der Fasern erhöht. Um ein Absetzen und Zusammenbacken von Fasermaterial zu vermeiden, wird die Mischung in einem bevorzugten Verfahren zusätzlich mit einem Ankerrührer aufgerührt.

Die Drehzahl des Ankerrührers beträgt bevorzugt mindestens 50 l/min, besonders vorzugsweise 60 bis 100 l/min.

Das Verfahren wird besonders effektiv durchgeführt, wenn das Mengenverhältnis von Wasser/Elastan-Fasermaterial 5/1 bis 15/1, vorzugsweise 5/1 bis 10/1 beträgt.

Die Behandlungsdauer des Elastanfasermaterials im Mischbehälter beträgt in einem besonders bevorzugten Verfahren von 15 bis 45 Minuten, insbesondere von 30 bis 45 Minuten.

Bevorzugt ist auch eine Variante des Verfahrens bei dem die Behandlungstemperatur beim Start der Behandlung der Elastanfaser von Raumtemperatur bis 70°C beträgt.

Das Material heizt sich durch eingetragene mechanische Energie im Laufe der Behandlung etwas auf.

Weiterer Gegenstand der Erfindung ist ein Verfahren zur Herstellung von Elastanspinnlösungen aus Elastanfaserschnittmaterial, dadurch gekennzeichnet, dass man zunächst eine Abscheidung von Präparationsmittel nach dem erfindungsgemäßen Abscheideverfahren durchführt, dass man das Elastanfasermaterial nach der Behandlung im Mischbehälter in Schritt f) über ein geeignetes Aggregat, insbesondere ein Sieb, eine Zentrifuge und/oder eine Presse, entfeuchtet, anschließend das Elastanfasermaterial bei einer Temperatur von mindestens 100°C auf einen Restfeuchtegehalt von weniger als 5 Gew.-%, vorzugsweise von 1 bis 3 Gew.-%, insbesondere von 0,5 bis 1,0 Gew.-% bezogen auf Feststoff, trocknet und mit einem Spinnlösungsmittel, insbesondere Dimethylformamid oder Dimethylacetamid unter Zusatz eines sekundären, aliphatischen Amins auflöst und in eine homogene Elastanspinnlösung überführt.

Gegenstand der Erfindung ist auch eine Vorrichtung zur Durchführung des erfindungsgemäßen Abscheideverfahrens, bestehend wenigstens aus einem, gegebenenfalls beheizbaren, Mischbehälter und einem Dispergieraggregat mit mindestens zwei Rührerwellen, wobei die Rührerwellen mit mindestens einer, vorzugsweise zwei Dissolverscheiben ausgestattet sind.

Bevorzugt wird eine Vorrichtung bei der zusätzlich ein zentraler Rührer, insbesondere ein Ankerrührer, angebracht ist, der mit einer niedrigeren Drehzahl betreibbar ist.

Weiter bevorzugt ist eine Variante der Vorrichtung die durch gekennzeichnet ist, dass der Mischbehälter mit einer zusätzlichen Abstreifvorrichtung für die rotierenden Einbauten des Rührers versehen ist.

Die folgenden Beispiele dienen der näheren Erläuterung der Erfindung, ohne sie selbst einzuschränken. Alle Prozentangaben beziehen sich, wenn nicht anders vermerkt, auf das Gewicht.

## Beispiele

Beispiel Nr. 1

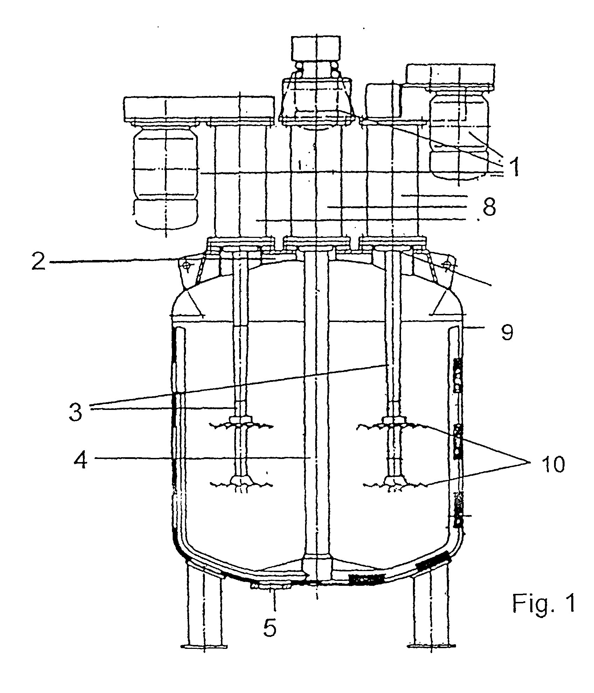

4,8 kg Elastan-Recyclingmaterial aus einem Titermix von 45 -1280 dtex und einem Präparationsgehalt von 4,8 Gew.-%, bestehend aus 100 % reiner Polyestertype (PES) wird unter Rühren in einem 100 Liter Mischbehälter 9 mit einem Innendurchmesser von 485 mm (vergl. Figur 1) in 55 Liter Wasser bei Raumtemperatur (24,7°C) eingetragen. Das Flottenverhältnis Wasser/Recyclingmaterial ist 11,5/1. Die Eintragzeit beträgt ca. 3 Minuten. Der Mischbehälter ist mit zwei hochtourig arbeitenden Rührerwellen 3, sogenannten Dissolvern ausgestattet, die jeweils mit 2 Dissolverscheiben 10 von 150 mm Durchmesser bestückt sind. Zusätzlich sorgt ein Ankerrührer 4 mit einem Abstreiforgan 6 dafür, dass sich am Kesselrand keine Faseransammlungen bilden. Die beiden Dissolver 3 laufen während der Eintragzeit einer Drehzahl mit ca. 1000 l/min. Nach Beendigung der Eintragung des Elastan-Recyclingmaterials werden für weitere 57 Minuten die beiden Dissolver 3 mit ca. 3100 (l/min) gefahren. Die Wassertemperatur steigt dabei bis auf 60°C an. Der Ankerrührer 4 läuft während der gesamten Versuchsdauer von 60 Minuten mit einer Drehzahl ca. 65 l/min. Nach 15, 30, 45, und 60 Minuten Behandlungsdauer wurden jeweils Proben vom Elastan-Recyclingmaterial und der Flotte gezogen und der Polydimethylsiloxangehalt nach der H-NMR-Methode bestimmt.

Anschließend wird die Flotte abgelassen, das Elastan-Recyclingmaterial über ein Sieb abgesaugt und mit einem Stempel abgepresst. Das Elastan-Recyclingmaterial, welches noch eine durchschnittliche Feuchte von ca. 38 Gew.-% aufweist, wird dann eine Stunde lang bei 100°C getrocknet ( Restfeuchte < 1 Gew.-%) und anschließend, wie eingangs beschrieben, zur Herstellung einer Elastan-Spinnlösung verwendet.

Der Polydimethylsiloxangehalt des Elastan-Recyclingmaterials lag wie folgt:

| Behandlungszeit (Minuten) | 15 | 30 | 45 | 60 |
|---|---|---|---|---|

(fortgesetzt)

| Präparationsgehalt vorher (Gew.-%) | 4,8 | 4,8 | 4,8 | 4,8 |
|---|---|---|---|---|
| Präparationsgehalt nachher (Gew. -%ig) | 2,1 | 1,4 | 1,1 | 1,3 |
| Präparationsgehalt Wasser (Gew.-%) | 0,23 | 0,29 | 0,32 | 0,30 |
| Präparationsverlust Recyclingmaterial (%) | 56,3 | 70,8 | 77,1 | 72,9 |

Wie man dem Beispiel entnehmen kann, wird der höchste Präparationsverlust bei einer 45 minütigen Behandlung mit 77,1 % erzielt. Offenbar hat die ölhaltige Emulsion aus Wasser und Polydimethylsiloxan bei einer 45 minütigen Behandlungsdauer ihren maximalen Sättigungsgrad erreicht, während bei 60 minütiger Behandlungsdauer der Präparationsverlust wieder abnimmt. Dieser Befund bestätigt sich auch in dem geringeren Präparationsgehalt im Wasser bei 60 minütiger Behandlungsdauer.

Beispiele 2 - 16

In der folgenden Tabelle I sind in den Beispielen 2-16 weitere Ausführungsformen der vorliegenden Erfindung aufgeführt. Es wurden jeweils die Behälter 9 mit 2 Rührerwellen 3 mit je 2 Dissolverscheiben 10 von 150 mm Durchmesser bestückt, einem Ankerrührer 4 mit Abstreiforgan 6 mit einer Tourenzahl von 50-60 (l/min) gearbeitet (vergleiche Figur 1). Als Elastan-Recyclingmaterial wurde sowohl reine PET- bzw. PES-Type, als auch ein Titermix aus der Polyester (PES)- und der Polyethertype (PET) im Titerbereich zwischen 17-1280 dtex eingesetzt. Variiert wurden das Flottenverhältnis, das Verhältnis zwischen Polyether- und Polyestertype mit unterschiedlichem Ausgangsgehalt an Polydimethylsiloxan, die Drehzahl der Rührwerke, sowie die Behandlungsdauer und die Behandlungstemperatur. Wie man der Tabelle I entnehmen kann, hängt die Höhe des Präparationsverlustes im Elastan-Recyclingmaterial sehr stark vom eingesetzten Flottenverhältnis Wasser/ Recyclingmaterial ab. Während bei einem Flottenverhältnis von 11,5/1 laut Beispiel 1, der Präparationsverlust des Fasermaterial bei 45 minütiger Behandlungsdauer bei 77,1 % liegt, werden bei einem Flottenverhältnis von 7,5/1 nach Beispiel 2 bereits 81,2 % Präparationsverlust und bei einem Flottenverhältnis von 5/1 nach Beispiel 3 schließlich 90,6 % Präparationsverlust erreicht. Bei noch niedrigeren Flottenverhältnissen wird bei den hohen Tourenzahlen die Grenze der Maschinenleistung erreicht. Im Beispiel Nr. 4 wird mit Elastan-Recyclingmaterial aus reiner Polyethertype (PET) gearbeitet. Im Vergleich zu Beispiel Nr. 2, wo unter sonst gleichen Bedingungen mit reiner Polyestertype (PES) gefahren wird, ist der Präparationsverlust 64,4 % statt 81,2 %ig. Der niedrigere Präparationsverlust im Falle der Polyethertype ist wahrscheinlich auf den andern Titermix zurückzuführen. Bei den gröberen Titermix von 45-1280 dtex im Falle der Polyestertype kommt es wahrscheinlich zu weniger Zusammenbackungen des Fasermaterials. Mit anderen Worten, das Recyclingmaterial der Polyestertype liegt in aufgelockerter Form vor. Wie die Beispiele Nr. 5 und 6 zeigen, spielt das Mischungsverhältnis Polyether/Polyestertype, sowie der jeweilige Ausgangspräparationsgehalt des Elastan-Recyclingmaterials keine wesentliche Rolle für die Höhe des Präparationsverlustes aus dem Elastan-Recyclingmaterial. In den Beispielen Nr. 7 bis 9 wird gezeigt, dass mit steigender Tourenzahl der Rührerwellen der Präparationsverlust des Elastan-Recyclingmaterials stark zunimmt. Wenn beide Rührerwellen mit einer Drehzahl von 1500 (l/min) fahren, liegt der Präparationsverlust bei nur 37,3 % (Beispiel Nr. 7), bei einer Tourenzahl von 2000 (l/min) bei 51,0 % (Beispiel Nr. 8) und bei einer Tourenzahl von 3500 (l/min) bei 73,5 % Präparationsverlust (Beispiel Nr. 9). In den Beispielen Nr. 10 bis 12 wurde die Wassertemperatur im Mischerbehälter durch Einschaltung einer Dampfbegleitheizung ausgehend von Raumtemperatur 24,7°C auf 60°C, über 70°C bis 90°C gesteigert. Wie man der Tabelle 1 entnehmen kann, führt eine Temperaturerhöhung über 70°C hinaus zu keiner Zunahme des Präparationsverlustes. Während bei Behandlung mit Raumtemperatur der Präparationsverlust bei 63,7 % liegt (vergleiche Beispiel Nr. 14), liegt der Präparationsverlust bei einer Behandlung von 60°C bei 67,6 % (Beispiel Nr. 10), bei einer 70°C Behandlung bei 68,6 % (Beispiel Nr. 11) und bei einer 90°C Behandlung nur noch bei 44,1 % (Beispiel Nr. 12). Aus den Beispielen Nr. 13 bis 15 geht hervor, dass bei einer Behandlungsdauer größer als ca. 45 Minuten (vergleiche Beispiel Nr. 14, Präparationsverlust = 63,7 %) der Präparationsverlust aus dem Recyclingmaterial wieder abnimmt (siehe Beispiel Nr. 15, Präparationsverlust = 52,0 %). Offenbar hat die Emulsion aus Wasser und Polydimethylsiloxan bei ca. 45 minütiger Behandlungsdauer ihren maximalen Sättigungsgrad erreicht. Im Beispiel Nr. 16 wird gezeigt, dass bei einem Flottenverhältnis Wasser/Elastan-Recyclingmaterial von 15:1 der Präparationsverlust im Recyclingmaterial immerhin noch 53,9 % beträgt.

## Tabelle 1

| Beispiel Nr. | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|
| Wasser (kg) | 55 | 55 | 55 | 55 | 55 | 55 | 55 | 55 | 55 | 55 | 55 | 55 | 55 | 55 | 55 |
| Recyclingmaterial (kg) | 7,33 | 11 | 4,8 | 5,5 | 5,5 | 5,5 | 5,5 | 5,5 | 5,5 | 5,5 | 5,5 | 5,5 | 5,5 | 5,5 | 3,67 |
| Titermix (dtex) | 45-1280 | 45-1280 | 17-270 | 17-1280 | 17-1280 | 17-1280 | 17-1280 | 17-1280 | 17-1280 | 17-1280 | 17-1280 | 17-1280 | 17-1280 | 17-1280 | 17-1280 |
| Flottenverhältnis Wasser/Recyclingmaterial | 7,5/1 | 5/1 | 11,5/1 | 10/1 | 10/1 | 10/1 | 10/1 | 10/1 | 10/1 | 10/1 | 10/1 | 10/1 | 10/1 | 10/1 | 15/1 |
| Verhältnis PET/PES-Type | 0/1 | 0/1 | 1/0 | 7/3 | 3/7 | 1/1 | 1/1 | 1/1 | 1/1 | 1/1 | 1/1 | 1/1 | 1/1 | 1/1 | 1/1 |
| Rührerwellen (1/min) | 3115 | 3115 | 3115 | 3115 | 3115 | 1500 | 2000 | 3500 | 3115 | 3115 | 3115 | 3115 | 3115 | 3115 | 3115 |
| Behandlungsdauer (min) | 45 | 45 | 45 | 45 | 45 | 45 | 45 | 45 | 45 | 45 | 45 | 30 | 45 | 60 | 45 |
| Ausgangstemperatur (°C) | 24,7 | 24,7 | 24,7 | 24,7 | 24,7 | 24,7 | 24,7 | 24,7 | 60 | 70 | 90 | 24,7 | 24,7 | 24,7 | 24,7 |
| Präp.gehalt vorher (Gew.-%) | 4,8 | 4,8 | 14,6 | 8,5 | 6,4 | 10,2 | 10,2 | 10,2 | 10,2 | 10,5 | 10,2 | 10,2 | 10,2 | 10,2 | 10,2 |
| Präp.gehalt nachher (Gew.-%) | 0,9 | 0,45 | 5,2 | 2,8 | 2,0 | 6,4 | 5,0 | 2,7 | 3,3 | 3,2 | 5,7 | 3,8 | 3,7 | 4,9 | 4,7 |
| Präparationsverlust (%) Elastan-Recyclingmaterial | 81,2 | 90,6 | 64,4 | 67,1 | 68,7 | 37,3 | 51,0 | 73,5 | 67,6 | 68,6 | 44,1 | 62,7 | 63,7 | 52,0 | 53,9 |

Beispiel Nr. 17 ( nicht erfindungsgemäß)

4,8 kg Elastan-Recyclingmaterial vom Titer 160 dtex und einem Ausgangspräparationsgehalt von 8,8 Gew-%, bestehend aus reiner Polyethertype (PET), wird wie in Beispiel Nr. 1 angegeben unter Rühren in einem 100 Liter Mischbehälter in 55 Liter Wasser von Raumtemperatur (24,7°C) eingetragen und wie dort beschrieben weiter behandelt. Die Recycling-Schnittfasern verklumpen und die Tourenzahlen der beiden Rührerwellen mussten unterhalb 1000 (l/min) auf ca. 800 (l/min) zurückgefahren werden. Der Versuch musste aufgrund der Faserverklumpungen und um Beschädigungen an den Rührwerken zu vermeiden, abgebrochen werden.

Reines feintitriges Elastan-Recyclingmaterial ist im Gegensatz zu Titermischungen mit grobtitrigen Anteilen, für das vorliegende Verfahren somit nicht unbedingt geeignet.

Beispiel Nr. 18

5,5 kg Elastan-Recyclingmaterial aus einem Titermix von 17- 1280 dtex und einem Ausgangspräparationsgehalt von 10,2 Gew.-%, bestehend aus der PET-und PES-Type im Mischungsverhältnis 1/1 wird unter Rühren in einem 100 Liter Mischbehälter in 55 Liter Wasser von 24,7°C eingetragen. Das Rührwerkzeug des Mischbehälters besteht aus nur einem zentral angeordneten Rührer mit einer Dissolverscheibe von 350 mm Durchmesser. Das Flottenverhältnis Wasser/Elastan-Recyclingmaterial beträgt 1/1. Nach ca. 3 Minuten Eintragszeit bei einer Tourenzahl von ca. 500 (l/min), wird die Rührerwelle weitere 42 Minuten mit der höchst möglichen Drehzahl von 1255 (l/min) weiter gefahren. Ein zusätzlicher Stromstörer im Kessel soll zur besseren Durchmischung beitragen. Es wird ferner ohne Ankerrührer und Abstreiforgan gearbeitet.. Nach insgesamt 45 Minuten Behandlungsdauer wird die Flotte abgelassen, das Elastan-Recyclingmaterial über ein Sieb abgesaugt, abgepresst und 1 Stunde im Umlufttrockenschrank bei 100°C getrocknet. Der restliche Polydimethylsiloxangehalt im Elastan-Recyclingmaterial lag bei 6,3 Gew.-%. Der gesamte Präparationsverlust betrug somit 38,2 %.

Wie ein Vergleich mit Beispiel Nr. 14 aus der Tabelle I zeigt, wird mit nur einer statt 2 Rührerwellen trotz größerer Dissolverscheibe und Stromstörer, das gute Ergebnis aus Beispiel Nr. 14 nicht erreicht ( Beispiel Nr. 14 Präparationsverlust = 63,7 %).

Beispiel Nr. 19

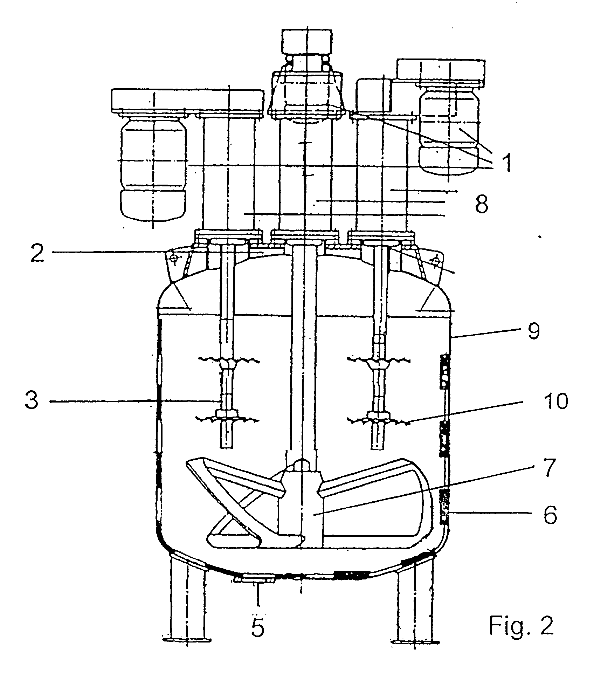

Es wird vom gleichen Elastan-Recyclingmaterial wie in Beispiel Nr. 18 beschrieben (Präparationsgehalt = 10,2 Gew.) ausgegangen und auch das Mischungsverhältnis PET/PES-Type und das Flottenverhältnis Wasser/ Elastan-Recyclingmaterial von 10/1 übernommen. Es wird jedoch wie in Beispiel Nr. 1 beschrieben, wieder mit 2 Rührerwellen und je 2 Dissolverscheiben vom Durchmesser 150 mm gearbeitet. Anstelle des Ankerrührers mit Abstreiforgan wird jedoch ein sogenanntes Mehrstromwerkzeug ( Vergleiche Figur 2, 7) mit schräg stehenden Stegen und zentral angeordneter Welle gefahren. Die Behandlungsdauer beträgt wiederum insgesamt 60 Minuten. Die beiden Rührdispergierer wurden wieder mit einer Tourenzahl von ca. 3100 (l/min) gefahren und der Mehrstromrührer wurde während der gesamten Behandlungsdauer mit ca. 120 (l/min) betrieben. Anschließend wird die Flotte abgelassen, das Elastan-Recyclingmaterial über ein Sieb abgesaugt und mit einem Stempel abgepresst. Das Elastan-Recyclingmaterial, welches noch eine durchschnittliche Feuchte von ca. 39,5 Gew.-% aufweist, wird dann eine Stunde lang bei 100°C getrocknet und anschließend wieder zur Herstellung einer Elastan-Spinnlösung verwendet.

Der Polydimethylsiloxangehalt des Elastan-Recyclingmaterials lag wie folgt:

| Behandlungszeit ( Minuten) | 30 | 45 | 60 |
|---|---|---|---|
| Präparationsgehalt vorher (Gew.-%) | 10,2 | 10,2 | 10,2 |
| Präparationsgehalt nachher (Gew.-%) | 6,2 | 5,6 | 6,0 |
| Präparationsgehalt Wasser (Gew.-%) | 0,40 | 0,48 | 0,42 |
| Präparationsverlust Recycl.material (%) | 39,2 | 45,1 | 41,2 |

Wie das Beispiel Nr. 19 zeigt, werden ohne Ankerrührer und Abstreiforgan und stattdessen mit einem Mehrstromwerkzeug mit zentral angeordneter Welle nicht die guten Ergebnisse im Vergleich zu den Beispielen Nr. 13-15 (mit Ankerrührer) aus Tabelle I, trotz gleicher Tourenzahl der Rührerwellen erzielt. ( Präparationsverlust in Beispiel Nr. 13 bei 30 minütiger Behandlungsdauer = 62,7 % gegenüber 39,2 % in Beispiel Nr. 19; Beispiel Nr. 14 bei 45 minütiger Behandlungsdauer = 63,7 % statt 45,1 % in Beispiel Nr. 19 und Beispiel Nr. 15 bei 60 minütiger Behandlungsdauer = 52,0 % statt 41,2 % in Beispiel Nr. 19 ). Ferner stellt man wiederum fest, dass bei zu langer Behandlungsdauer von 60 statt 30 bis 45 Minuten, der Präparationsverlust im Elastan-Recyclingmaterial wieder deutlich abnimmt. Dies wird auch wieder im abnehmenden Präparationsgehalt der Flotte bestätigt.

Beispiel Nr. 20 ( nicht erfindungemäß)

Es wird wiederum vom gleichen Elastan-Recyclingmaterial, wie in Beispiel Nr. 18 beschrieben, ausgegangen. Auch das PET/PES-Mischungsverhältnis des Recyclingmaterials und das Flottenverhältnis von 10/1 werden übernommen. Der Mischbehälter ist nur mit einem herkömmlichen Schaufelradrührer (nicht gezeigt), der auf einer zentralen Welle sitzt, ausgestattet. Die Behandlungsdauer beträgt 45 Minuten. Der Schaufelradrührer wird während der ca. 3 minütigen Eintragszeit des Recyclingmaterials mit einer Tourenzahl von 60 (l/min), anschließend mit der höchst möglichen Tourenzahl von ca. 195 (l/min) gefahren. Der restliche Polydimethylsiloxangehalt beträgt 8,8 Gew.-%, was einem Ölverlust von nur 13,7 % entspricht. Wie das Vergleichsbeispiel Nr. 20 zeigt, werden mit herkömmlichen Rührwerken und niedrigen Tourenzahlen keine befriedigenden Ergebnisse zur Polydimethylsiloxan-Abscheidung aus Elastan-Recyclingmaterial erreicht.

**Patentansprüche**

1.  Verfahren zur Abscheidung von mindestens 30 Gew.-%, bevorzugt mindestens 50 Gew.-% ölartigen Präparationsmitteln aus präparationshaltigen Elastanfasern, bevorzugt Präparationsmitteln, die Polydialkylsiloxan, besonders bevorzugt Polydimethylsiloxan enthalten, bezogen auf 100 Gew.-% Ausgangsgehalt an Präparationsmittel in dem Elastanausgangsmaterial, **dadurch gekennzeichnet, dass** man

    a) eine Mischung von Elastanfasern mit unterschiedlichem Titer als Faserschnitt einsetzt, wobei man von Fasern mit einem Titer von 11 bis 10000 dtex und mehr ausgeht und insbesondere den Anteil an Feintiterfasern mit einem Titer kleiner oder gleich 900 dtex unter 80 Gew.-% bezogen auf 100 Gew.-% Ausgangsgewicht an Fasern hält,
    b) die Elastan-Schnittfasern in einem Mischbehälter mit Wasser im Flottenverhältnis Wasser/Elastan-Schnittfasem, von mindestens 5/1 vermischt,
    c) die Vermischung unter Verwendung von Rührwerkzeugen 3 mit einer Drehzahl von mindestens 1200 l/min vornimmt,
    d) die Behandlung bei Raumtemperatur oder erhöhter Temperatur, insbesondere bis 90°C, bevorzugt bis 70°C durchführt,
    e) eine Behandlungsdauer von 10 bis 60 Minuten einhält und
    f) anschließend die Präparationsmittel enthaltende Wasserflotte von dem Fasermaterial abtrennt.

2.  Verfahren nach Anspruch 1, **dadurch gekennzeichnet, dass** als Elastan-Schnittfasern Elastane auf Basis Polyetherurethanen und/oder Polyesterurethanen, oder Gemischen aus polyether- und polyesterbasierten Elastan-Schnittfasern in beliebigem Mischungsverhältnis, einsetzt.

3.  Verfahren nach Anspruch 1 oder 2, **dadurch gekennzeichnet, dass** die Rührwerkzeuge aus mindestens 2 Rührerwellen mit mindestens 2 Dissolverscheiben pro Rührer bestehen mit einem Verhältnis des Durchmessers der Dissolverscheiben zum Durchmesser des Kessels von 1 zu 5 bis 3 zu 5.

4.  Verfahren nach den Ansprüchen 1 bis 3, **dadurch gekennzeichnet, dass** die Drehzahl der Rührerwellen 3 mindestens 2000 l/min, vorzugsweise mindestens 3000 l/min beträgt.

5.  Verfahren nach den Ansprüchen 1 bis 4, **dadurch gekennzeichnet, dass** die Mischung zusätzlich mit einem Ankerrührer aufgerührt wird.

6.  Verfahren nach Anspruch 6, **dadurch gekennzeichnet, dass** die Drehzahl des Ankerrührers mindestens 50 l/min, vorzugsweise 60 bis 100 l/min beträgt.

7.  Verfahren nach den Ansprüchen 1 bis 6, **dadurch gekennzeichnet, dass** das Mengenverhältnis von Wasser/Elastan-Fasermaterial 5/1 bis 15/1, vorzugsweise 5/1 bis 10/1 beträgt.

8.  Verfahren nach den Ansprüchen 1 bis 7, durch **gekennzeichnet**, dass die Behandlungsdauer des Elastanfasermaterials im Mischbehälter von 15 bis 45 Minuten, insbesondere von 30 bis 45 Minuten beträgt.

9.  Verfahren nach den Ansprüchen 1 bis 8, **dadurch gekennzeichnet, dass** die Behandlungstemperatur beim Start der Behandlung von Raumtemperatur bis 70°C beträgt.

**10.** Verfahren zur Herstellung von Elastanspinnlösungen aus Elastanfaserschnittmaterial, **dadurch gekennzeichnet, dass** man zunächst eine Abscheidung von Präparationsmittel nach einem der Ansprüche 1 bis 9 durchführt, dass man das Elastanfasermaterial nach der Behandlung im Mischbehälter in Schritt f) über ein geeignetes Aggregat, insbesondere ein Sieb, eine Zentrifuge und/oder eine Presse, entfeuchtet, anschließend das Elastanfasermaterial bei einer Temperatur von mindestens 100 °C auf einen Restfeuchtegehalt von weniger als 5 Gew. -%, vorzugsweise von 1 bis 3 Gew. -%, insbesondere von 0,5 bis 1,0 Gew. -% bezogen auf Feststoff, trocknet und mit einem Spinnlösungsmittel, insbesondere Dimethylformamid oder Dimethylacetamid unter Zusatz eines sekundären, aliphatischen Amins auflöst und in eine homogene Elastanspinnlösung überführt.

**11.** Vorrichtung zur Durchführung eines Verfahrens nach einem der Ansprüche 1 bis 10, bestehend wenigstens aus einem, gegebenenfalls beheizbaren, Mischbehälter 9 und einem Dispergieraggregat mit mindestens zwei Rührerwellen 3, wobei die Rührerwellen (3) mit mindestens einer, vorzugsweise zwei Dissolverscheiben (10) ausgestattet sind.

**12.** Vorrichtung nach Anspruch 11, durch **gekennzeichnet**, dass zusätzlich ein zentraler Rührer (4), insbesondere ein Ankerrührer, angebracht ist, der mit einer niedrigeren Drehzahl betreibbar ist.

**13.** Vorrichtung nach den Ansprüchen 11 oder 12, durch **gekennzeichnet**, dass der Mischbehälter mit einer zusätzlichen Abstreifvorrichtung (6) für die rotierenden Einbauten des Rührers (4) versehen ist.

Fig. 1

Fig. 2